Europäisches Patentamt

**European Patent Office**

**Office européen des brevets**

(19)

(11) Publication number: **0 190 005**
**A2**

(12)

# EUROPEAN PATENT APPLICATION

(21) Application number: **86300422.2**

(22) Date of filing: **22.01.86**

(51) Int. Cl.⁴: **G 01 N 27/00**

(30) Priority: **23.01.85 US 693907**

(43) Date of publication of application:
**06.08.86 Bulletin 86/32**

(84) Designated Contracting States:
**BE CH DE FR GB LI NL SE**

(71) Applicant: **INTEGRATED IONICS, INC.**
**Research Park 100 Wall Street**
**Princeton New Jersey(US)**

(72) Inventor: **Lauks, Imants R.**
**544 Maple Court**
**Bensalen Pennsylvania(US)**

(72) Inventor: **Van der Spiegel, Jan**
**One Independence Pl.**
**Philadelphia Pennsylvania(US)**

(74) Representative: **Szczuka, Jan Tymoteusz et al,**
**Cruikshank & Fairweather 19 Royal Exchange Square**
**Glasgow G1 3AE Scotland(GB)**

(54) **Ambient sensing devices with isolation.**

(57) An ambient electrochemical device is described in which the sensing means (50,55) and the active electronics (40) are formed on discrete regions of the same surface of an inert substrate (30) and are interconnected by a shielded conductor (60,65). The active electronics (40) are in a semiconductive material which is formed epitaxially on the substrate (30), for example, sapphire ($Al_2O_3$) to provide a monolithic structure.

Fig. 2

EP 0 190 005 A2

# AMBIENT SENSING DEVICES WITH ISOLATION

A related application is "Ambient Sensing Device" filed on 21st January 1985 as European Application No. 85300373.9

This relates to ambient sensing devices such as ion sensitive and chemical sensitive devices and to methods of manufacturing such devices and in particular to devices that have a high degree of protection from the ambient to which they are exposed.

It frequently is desirable to monitor the composition of a chemical environment, for example, to regulate chemical or biochemical processes, to determine air or water quality, or to measure parameters of interest in biomedical, agricultural or animal husbandry disciplines.

Because of the nature of the chemical environment, it is desirable that any measurement apparatus have at least some of the properties of: low cost, simple fabrication methodology, digital operation, some degree of signal preconditioning or intelligence, small size, high chemical sensitivity with selectivity, multiple species information with specificity, choice of reversible or integrating response to chemical species, temperature insensitivity or compensation and low power operation. In addition the measurement apparatus should have good long term electrochemical stability, good physical resiliency and strength and good resistance to corrosion and chemical attack. In the case of electrical measurement devices, the devices should also have low electrical impedance to provide good signal to noise ratios and preferably a Nernstian response to the chemical phenomena being measured.

One method for the detection, measurement and monitoring of the chemical properties of a substance involves the measurement of an electric potential where the potential is dependent upon the chemical activity being measured. Bergveld has proposed that hydrogen and sodium ion activities in an aqueous solution be measured by a metal oxide semiconductor field-effect transistor (MOSFET) modified by removal of the gate metal. P. Bergveld, "Development, Operation, and Application of the Ion-Sensitive Field-Effect Transistor as a Tool for Electrophysiology" IEEE Transactions of Biomedical Engineering, Vol. BME-19, pages 342-351 (September, 1972). In particular, if a MOSFET with no gate metal were placed in an aqueous solution, Bergveld suggested that the silicon dioxide insulation layer would become hydrated and then, because of impurities in the hydrated layer, ion selective. After hydration of the insulation layer of the MOSFET, Bergveld believed the device could be used for ion activity measurement by immersing the device in the solution in question and then recording conductivity changes of the device. Thus, the Bergveld device is commonly referred to as an ion-sensitive field effect transistor (ISFET).

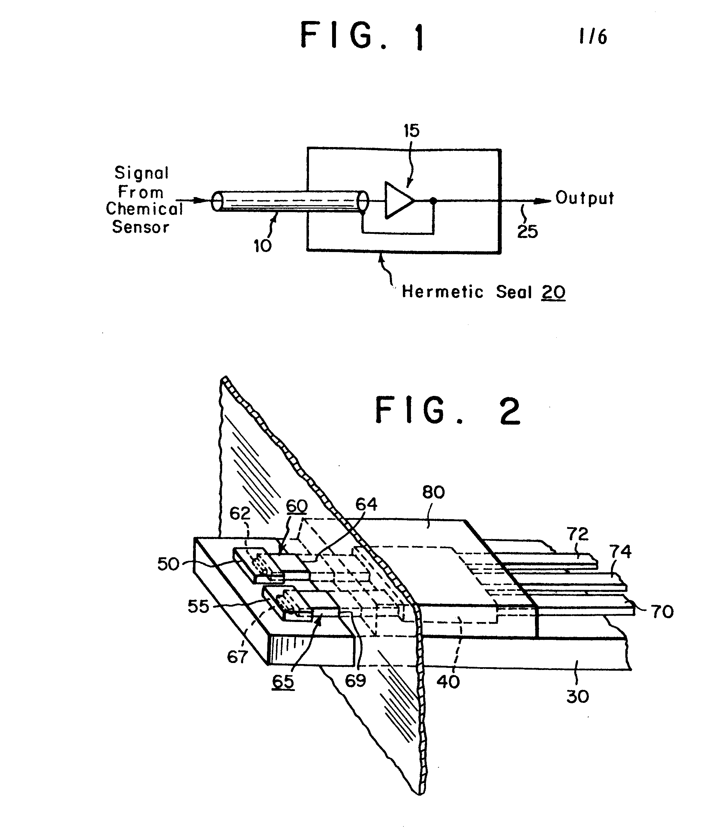

Bergveld's work led to other developments in the field of ion sensitive electrodes such as the chemical sensitive field effect transistor (CHEMFET) device described in U.S. Patent 4,020,830 which is incorporated herein by reference. As described in the '830 patent, the CHEMFET is a MOSFET is which the gate metal has been replaced by a chemically sensitive system that is adapted to interact with certain substances to which the system is exposed. Thus as shown in Figs. 1 and 2 of the '830 patent, the CHEMFET is identical in structure to a MOSFET except for a layer or membrane 38 that is deposited in place of a metal gate layer on the oxide insulator above the channel region of the transistor and, optionally, an impervious layer 44 that covers all other parts of the CHEMFET that might be exposed to the solution. Numerous variations on CHEMFET structures are disclosed, for example, in U.S. Patents 4,180,771, 4,218,298, 4,232,326, 4,238,757, 4,305,802, 4,332,658, 4,354,308, 4,485,274 and 4,397,714.

When the chemically-sensitive layer of the CHEMFET is brought into contact with a solution containing the substance to be monitored, a change in the electrochemical potential of the layer will be generated, producing an electric field that extends into the channel region of the transistor between its source and drain regions. The existence of this field in the channel region between the source and drain renders the channel region partially conductive and results in the the establishment of a current from the source to the drain that is proportional to the magnitude of the change in electrochemical potential generated by the interaction of the layer and the environment. When a supply voltage is applied to the drain of such a transistor and a load resistance is connected to the source to form a source follower, the voltage at the source will be proportional to the signal generated by the electrochemical gate. Since the electrochemical field will also be related to the activity of the ions in the environment, the drain current will provide a measure of this activity. Where a sensitive layer comprises amorphous iridium oxide, especially sputtered iridium oxide, and the ionic environment comprises a concentration of hydrogen ions, then the drain current will provide a measure of the pH of the ionic environment.

Despite this intense development of new designs, there is still considerable work to be done to achieve some of the desirable transducer properties described above. One continuing problem has been the susceptibility of these devices to corrosion and chemical attack from the solutions to which they are exposed. While the device described in U.S. Patent 4,180,771 addresses this problem and attempts to solve it by locating the chemically sensitive system apart from the gate layer and connected thereto by a wire, this device has not proven to be very satisfactory in operations and in any event is relatively complicated to manufacture.

U.S. Patent No. 4,437,969 a structure is described for reducing the problems of corrosion and chemical attack on the chemically-selective layer by locating this layer at a distance from the channel region. Thus, the chemically sensitive layer is not located over the channel region of the transistor but rather is remotely located elsewhere on the same surface of the same substrate as the transistor and is connected to a conducting gate layer on the insulating oxide over the channel region. Because the remotely located chemically sensitive system is electrically part of the gate layer, this structure is called an extended gate field effect transistor (EGEET). Advantageously this device can be fabricated using a modification of conventional photolithographic techniques with the accompanying advantages and cost savings of this technique.

The extended gate field effect transistor is only one of a family of electronic devices that are useful in measuring phenomona that are remote from the main body of the electronic device. In general such devices are available to measure potential or current and include three components: a sensing means on a first portion of a silicon substrate, some form of active electronics on a second portion of the substrate remote from and separable from the first portion, and means for connecting the sensing portion to the active electronics. However, all these devices are susceptible to degradation in performance as a result of interaction with the solution which they monitor. Ions of the solution migrate through to the silicon in sufficient quantities to affect measurements and, ultimately, to destroy the effectiveness of the device as a chemical monitor.

To avoid these problems we have devised a structure in which the sensing means and the active electronics are formed on discrete regions of the same surface of an inert substrate and are interconnected by a shielded conductor. Advantageously, the active electronics are in a semiconductor material which is formed epitaxially on the substrate to provide a monolithic structure; and the sensor, the active electronics and the shielded conductor are formed by conventional photolithographic techniques.

These and other objects, features and advantages of our invention will be more readily apparent from the following detailed description of an embodiment of our invention in which:

Fig. 1 is a schematic illustration of the main elements of a circuit implemented in an embodiment of the invention;

Fig. 2 is a perspective view of the embodiment of the invention;

0190005

Fig. 3A and 3B are a series of flow diagrams, cross-sectional view and plan views illustrating the formation of a portion of the device of Fig. 2;

Fig. 4 is a plan view of the completed device of the embodiment of the invention: and

Figs. 5 and 6 illustrate an extended gate field effect transfer.

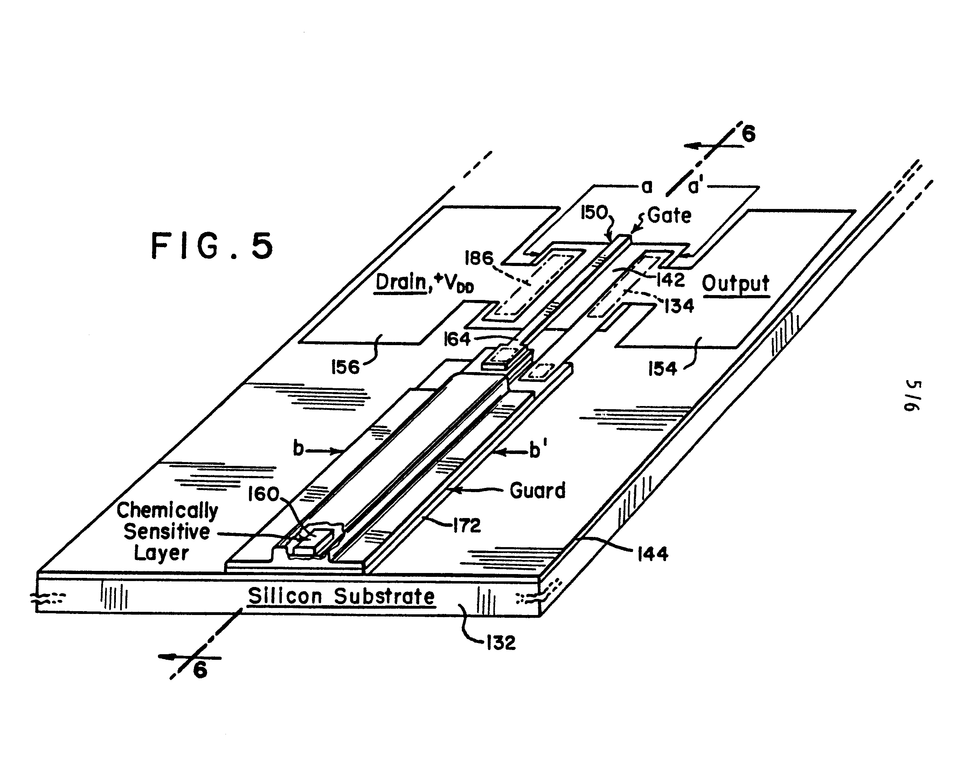

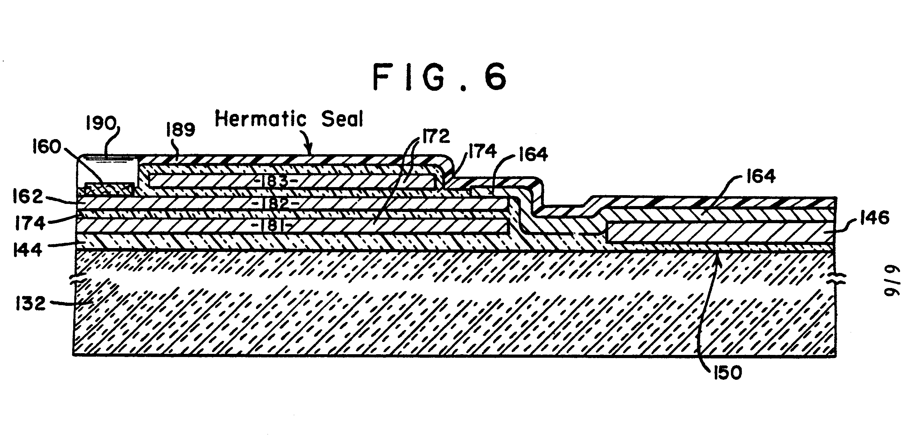

As shown in Figs. 5 and 6 an extended gate field effect transistor (EGFET) comprises a monolithic semi-conductive substrate 132 of a material such as silicon on which there is an oxide layer 144. Source and drain regions 134, 136 respectively are formed in substrate 132 and an active channel region 150 is located between the source and drain regions. Electrical connections or bonding pads 142 are made to the source and drain regions. Insulating layers 144 such as silicon oxide extends over the region between the source and drain, and overlaying this region is a gate electrode 146. The gate electrode is electrically connected to a chemically sensitive layer 160 which is located on the same surface of the substrate at a point removed from the region overlaying the active channel region. Illustratively, the chemically sensitive layer is connected to the gate electrode by a signal line 162 and a layer of metallization 164 such as aluminum. Advantageously, signal line 162 is shielded on all sides by a conductive shield 172 that is insulated from the signal line by an insulating oxide 174, all of which are formed photolithographically. Thus, the signal line, insulating oxide and conductive shield form a coaxial conductor between the chemically-sensitive layer and the gate electrode. Preferably, the shield is electrically connected to the source region as shown in Fig. 5 so that the shield is bootstrapped to the output of the field effect transistor.

The bootstrapped connection of shield to output is shown schematically in Fig. 1 of the present application which depicts a coaxial line 10, an amplifier 15 and an hermetic seal 20 surrounding the amplifier and the connections between the coaxial line and the amplifier. As shown in Fig. 1, an electrical signal from a chemical sensor is applied by coaxial line to amplifier 15 which produces an output signal on line 25.

While the EGFET of Figs. 5 and 6 provides considerable improvement over the CHEMFET in reliability and lifetime because it separates the chemically-sensitive layer from the transistor, it still is susceptible to chemical attack. Ions from the solution being studied can migrate through to the silicon in sufficient quantities to affect measurements being made by the EGFET and can eventually make the device unreliable for its intended use, if not wholly inoperative. While it is possible to seal the upper surface of the silicon during fabrication of the EGFET, such sealing does not protect the edges of the silicon that are exposed when the silicon wafer is diced and individual devices are separated from the wafer. Thus, an additional sealing process is required to seal the edges, thereby increasing the cost of making the device.

In accordance with the present invention, these problems are avoided by forming the chemically-sensitive layer and the active electronics, such as a semiconductor device or an integrated circuit, on discrete regions of the same surface of an inert substrate and by interconnecting the layer and the active electronics with a shielded conductor. The substrate is selected so that the active electronics can be formed in a semiconductor grown epitaxially on the substrate to provide a monolithic integrated circuit (i.e., one "whose elements are formed in situ upon or within a semiconductor substrate with at least one of the elements formed within the substrate" -- IEEE Standard Dictionary of Electrical and Electronics Terms, (2d. Ed. 1977); and the chemically-sensitive layer, active electronics and shielded conductor can all be formed by photolithographic processes. In the case where silicon is the semiconductor, the substrate preferably is sapphire.

A device formed in accordance with the invention is shown in Fig. 2. It comprises a substrate 30, active electronics 40, first and second chemically-sensitive layers 50, 55, shielded conductors 60, 65, respectively, connecting layers 50, 55 to the active electronics, conductive leads 70, 72, 74 and hermetic seal 80.

Illustratively, the substrate is sapphire ($Al_2O_3$). The hermetic seal likewise can be made of the same material formed integrally with the substrate. Alternatively any other hermetic sealant can be applied to the device photolithographically at the wafer level of fabrication. Examples of other hermetic sealants are CVD or sputtered ceramics, parylene or polyimide.

The chemically-sensitive layers can be made of any material suitable for monitoring the chemical or ionic species to be studied. For example, as stated above, sputtered iridium oxide is suitable for measuring pH. Numerous other examples of such materials are given in the above-referenced applications and patents. These layers are formed on substrate 30 so as to be integral therewith.

The shielded conductors comprise a signal line 62, 67 such as doped polycrystalline silicon and a shield 64, 69 that likewise may be formed of doped polycrystalline silicon.

The active electronics typically is a monolithic integrated circuit field effect transistor amplifier, or several such amplifiers, and as shown in Fig. 1, the output of the amplifier is advantageously bootstrapped to the coaxial shields 64, 69 of lines 60, 65. The three conductive lines 70, 72, 74 illustratively provide a ground, an output and a voltage supply, respectively.

To illustrate the use of the present invention, a wall 82 is shown in Fig. 2 through which the chemically-sensitive layers 50, 55 protrude. In this configuration the chemically-sensitive layers might be used to monitor the chemical properties of a fluid flowing in a tube defined by said wall. As a result, only the chemically-sensitive layers contact the fluid while the active electronics 40 and conductive lines 70, 72, 74 remain outside the wall protected from the fluid.

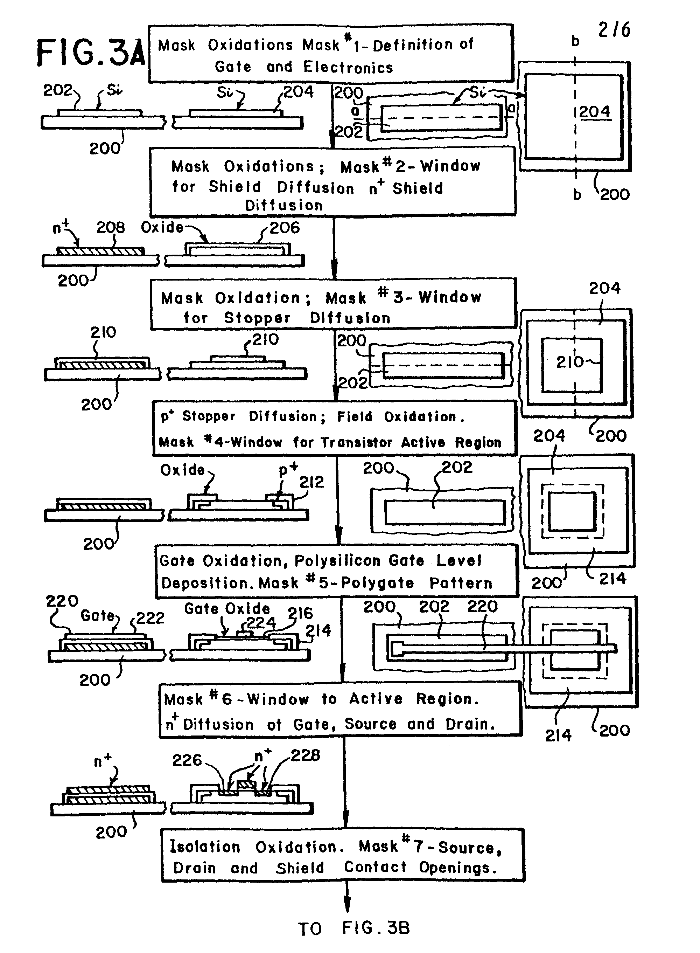

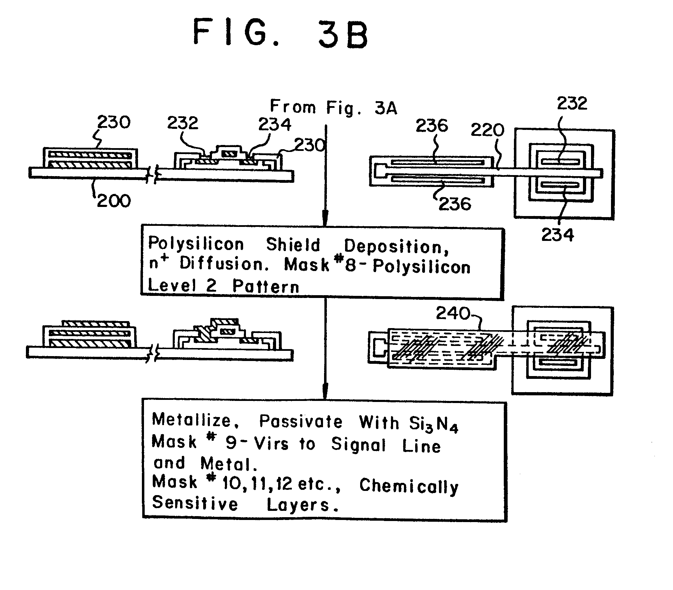

The practice of the invention in the photolithographic fabrication of an extended gate field effect transistor is shown in the flow chart, cross-sectional profiles and plan views of Figs. 3A and 3B. The plan views are shown on the right hand side of Figs. 3A and 3B and depict two portions of the upper surface of an inert substrate 200 in which one such EGFET is to be formed. Cross-sectional views along lines a-a and b-b of the two portions of interest on the substrate are shown on the left hand side of Figs. 3A and 3B. As in conventional photolithography, numerous identical devices are formed simultaneously, each in a different area of the substrate. For convenience, however, we will describe the formation of only one such device.

Substrate 200 typically is a monolithic wafer of sapphire. Using the well-known silicon-on-sapphire (SOS) process, an epitaxial film of silicon is first grown on the sapphire substrate. Discrete regions or islands of silicon 202, 204 are then defined on the substrate by conventional photolithographic techniques. An oxide layer 206 is then grown over the entire upper surface of the wafer, and a window is defined therein to expose silicon layer 202. This layer is then subjected to an n+ diffusion to form a lower layer 208 of the shield of the coaxial line.

Another oxide layer 210 is then grown over the upper surface of the wafer, and a window is opened in this layer around the periphery of silicon layer 204. A p+ stopper diffusion is then performed to define a p+ region 212 around layer 204.

Next, another oxide layer 214 is grown and a window is defined therein for the formation of an insulating layer 216 above the channel region. This insulating layer 216 is next formed by growth of additional oxide to the desired thickness.

A polysilicon level 220 is then deposited and is defined by suitable masking. In the embodiment shown in Fig. 3A polysilicon layer 220 is used for both the conductor 222 of the coaxial line and for a gate electrode 224. Windows are then formed in insulating layer 216 and an n+ diffusion is made. This diffusion forms n+ source and drain regions 226, 228 in silicon layer 204 and also dopes the polysilicon layers of conductor 222 and gate electrode 224.

Another layer of oxidation 230 is then formed above the conductor and gate electrode and windows 232, 234, 236, respectively, are defined in this layer to provide contacts to the source, the drain and the bottom layer of the shield. Next, a layer 240 of polysilicon is deposited over oxide layer 230 and in windows 232, 234, 236 and is subjected to an n+ diffusion. This layer is then shaped photolithographically to constitute the upper part of the shield of the coaxial line, as well as the contact to the source region through window 232. The upper part of the shield is connected through windows 236 to the lowermost layer 208 of polysilicon so as to complete the shield of the coaxial line surrounding the center conductor 222.

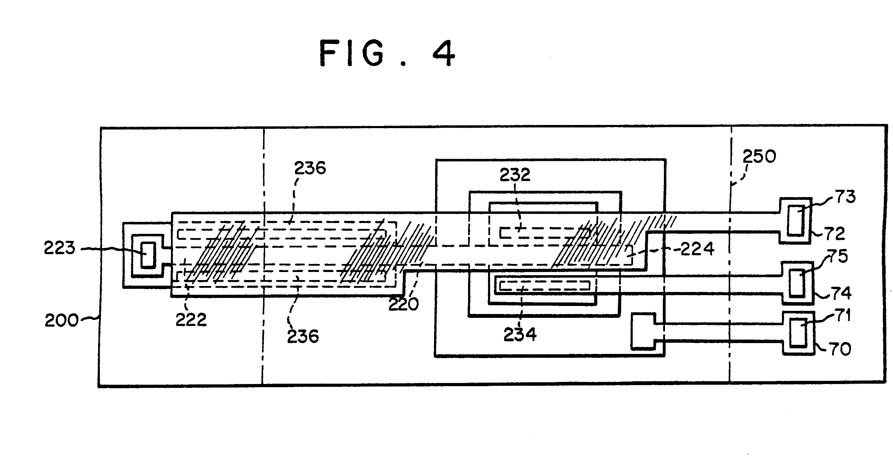

The ground, the output and the voltage supply conductor leads 70, 72, 74 are then formed by deposition of metal and photolithographic patterning. As shown most clearly in Fig. 4, ground lead 70 is connected to a portion of silicon layer 204 removed from the active region of the transistor defined therein. Voltage supply lead 74 is connected to the drain region through window 234; and output lead 72 is connected to the source region through window 232.

The device is then passivated by formation of a layer of silicon nitride. A supplementary packaging of the active electronics 250 is deposited and formed photolithographically. Contact windows to the signal line 223 and the metallization 71, 73, 75 are formed photolithographically.

Finally, the chemically-sensitive layer is then formed using, for example, photolithographic techniques described in the above referenced applications. Advantageously, these techniques also use conventional photolithography to minimize cost and improve device characteristics. If desired several different chemically-sensitive layers may be fabricated using these techniques so as to provide a device that can detect multiple chemical or ionic species in the ambient to which it is exposed. Alternatively, the chemically-sensitive layer could be formed by conventional silk-screening techniques.

The final device shown in Fig. 4 comprises a chemically-sensitive layer formed on and integral with one region of an inert substrate, an active electronics component formed on and integral with a separate region of the substrate, a shielded conductor connecting the chemically-sensitive layer to the active electronics package and a seal overlaying the active electronics.

Numerous modifications of the invention will be apparent from the foregoing description.

CLAIMS:

1.  An ambient sensing electrochemical device comprising:

an   inert substrate (30);

a monolithic semiconductive device (40) formed on a first portion of a first surface of said substrate (30) and integral therewith;

means for sensing (50,55) at least one property of the ambient formed on the integral with a second portion of the first surface of said substrate removed from said first portion; and

means for connecting (60,65) said sensing means to said semiconductive device.

2.  The device of claim 1 wherein the inert substrate is sapphire and the semiconductive device is made of silicon.

3.  The device of claim 1 wherein the semiconductive device includes at least one transistor.

4.  The device of claim 1 wherein the sensing means is an amorphous metal oxide electrode in which the metal oxide is selected from the group consisting of the oxides of the platinum and rhenium groups of metal and the ambient property that is sensed is pH.

5.  The device of claim 4 wherein the sensing means is an iridium oxide electrode.

6.  The device of claim 1 wherein said conductive means (70,72,74) is further characterized by a coaxial line (60,65) formed photolithographically between the sensing means (50,55) and the semiconductive device (40).

7.   The device of claim 1 further comprising means for sealing (80) said semiconductive device (40) from the ambient to which said sensing means is exposed.

8.   The device of claim 6 wherein said sealing means (80) is integrally formed with the substrate (30).

9.   The device of claim 1 wherein the substrate (30) protrudes through a wall (82) with the sensing means (50, 55) on one side of the wall (82) and the semiconductive device (40) on the other.

10. An ambient sensitive field effect transistor device comprising:

an inert substrate (200);

a semiconductive layer (204) formed epitaxially on a first portion of a first surface of said substrate;

source (226) and drain (228) regions defined in said layer with an active channel region (212) therebetween;

electrically conductive connections (72,74) to said source and drain regions;

an insulating layer (216) overlaying the active channel region (212) between said source (226) and drain (228) regions;

conductive means (220) overlaying said insulating layer (216) for controlling current flow in said channel region;

means for sensing (50,55) at least one property of the ambient mounted on a second portion of the first surface of said substrate removed from said first portion; and

means for connecting (60,65) said sensing means (50, 55) to said conductive means (220).

11. The device of claim 10 wherein the inert substrate is sapphire and the semiconductor layer is silicon.

12. The device of claim 10 wherein the sensing means (50,55) is an amorphous metal oxide electrode in which the metal oxide is selected from the group consisting of the oxides of the platinum and rhenium groups of metal and the ambient property that is sensed is pH.

13. The device of claim 12 wherein the sensing means is an iridium oxide electrode.

14. The device of claim 10 further comprising means for sealing (80) said semiconductive layer from the amibent to which said sensing means is exposed.

15. The device of claim 10 wherein said conductive means is further characterised by a coaxial line (60,65) between the sensing means (50,55) and the portion of the conductive means that overlays the insulating layer (216).

16. A method of forming an ambient sensing electrochemical device comprising the steps of:
    forming a semiconductive device on a first portion of a first surface of an inert substrate by growing a semiconductive layer epitaxially on said first surface and defining said device photolithographically in said semiconductive layer;
    forming by photolithographic means on a second portion of the surface of said substrate removed from said first portion means for sensing at least one property of the ambient;
    connecting said sensing means to said semiconductive device; and
    sealing said semiconductive device from the ambient to which said sensing means are exposed.

17. The method of claim 16 wherein the inert substrate is sapphire and the semiconductive layer is silicon.

18. The method of claim 16 wherein the step of connecting said sensing means to said semiconductive device comprises the step of forming by photolithographic means a coaxial line between the sensing means and the semiconductive device.

19. The method of claim 16 wherein the step of sealing the semiconductive device comprise the step of forming a seal around said semiconductive device integral with the substrate.

# FIG. 1

Signal
From
Chemical
Sensor

15

10

Output

25

Hermetic Seal 20

# FIG. 2

62    60    64    80    72    74

50

55

67    65    69    40    70

30

**FIG.3A**

Mask Oxidations Mask #1- Definition of Gate and Electronics

202 Si    Si 204    200    Si    204

200

Mask Oxidations; Mask #2- Window for Shield Diffusion n+ Shield Diffusion

n+ 208 Oxide 206

200

Mask Oxidation; Mask #3- Window for Stopper Diffusion

210    210    200    202    210    204    200

200

p+ Stopper Diffusion; Field Oxidation. Mask #4-Window for Transistor Active Region

Oxide    p+ 212    200    202    204    200    214

200

Gate Oxidation, Polysilicon Gate Level Deposition. Mask #5-Polygate Pattern

220 Gate 222    Gate Oxide 224 216 214    200 202 220    200 214

200

Mask #6-Window to Active Region. n+ Diffusion of Gate, Source and Drain.

n+    226 n+ 228    214 200

200

Isolation Oxidation. Mask #7-Source, Drain and Shield Contact Openings.

TO FIG. 3B

# FIG. 3B

From Fig. 3A

Polysilicon Shield Deposition, $n^+$ Diffusion. Mask #8 - Polysilicon Level 2 Pattern

Metallize, Passivate With $Si_3N_4$
Mask #9 - Virs to Signal Line and Metal.
Mask #10, 11, 12 etc., Chemically Sensitive Layers.

# FIG. 4

FIG. 5

# FIG. 6

190, 189, Hermatic Seal, 172, 174, 164, 164, 160, 162, 174, 144, 146, 132, 183, 182, 181, 150

0190005